# EUROPÄISCHE PATENTSCHRIFT

(11) **EP 0 484 358 B1**
(45) Veröffentlichungstag und Bekanntmachung des Hinweises auf die Patenterteilung: **03.03.1993**
(21) Anmeldenummer: 90910708.8
(22) Anmeldetag: 30.07.1990
(51) Int. Cl.: F24D 19/10, F24D 11/02

(54) **VERFAHREN ZUR UMSETZUNG VON SONNENENERGIE IN WARME SOWIE EINRICHTUNG ZUR DURCHFUHRUNG DES VERFAHRENS**
PROCESS AND DEVICE FOR CONVERTING SOLAR ENERGY TO HEAT
PROCEDE DE CONVERSION DE L'ENERGIE SOLAIRE EN CHALEUR ET DISPOSITIF POUR LA MISE EN UVRE DE CE PROCEDE

(30) Priorität: 28.07.1989 DE 3925145
(43) Veröffentlichungstag der Anmeldung: 13.05.1992
(73) Patentinhaber: KIRCHMAYER, Leonhard, D-80333 München (DE)
(72) Erfinder: KIRCHMAYER, Leonhard, D-80333 München (DE)
(74) Vertreter: Patentanwälte Leinweber & Zimmermann
(86) Internationale Anmeldenummer: EP9001243
(87) Internationale Veröffentlichungsnummer: WO9102199

(56) Entgegenhaltungen:
- EP-A- 0 033 756
- EP-A- 0 054 729
- EP-A- 0 092 251
- FR-A- 2 404 181
- FR-A- 2 496 847

## Beschreibung

Die Erfindung bezieht sich auf ein Verfahren zur Umsetzung von Sonnenenergie in Wärme mit Hilfe eines Sonnenkollektors aus einer Mehrzahl von an der Außenseite eines Gebäudes oder dgl. festgelegten, miteinander gekuppelten und an ein Wärmeträgerfluidnetz angeschlossenen Kollektorelementen, die jeweils einen am Boden einer von einer transparenten Abdeckung begrenzten Kollektorkammer befindlichen Kollektorkanal umfassen, der über eine Verbindungsleitung aus einem Vorlauf- und einem Rücklaufzweig normalerweise mit einem Hochtemperaturspeicher in Verbindung steht, bis bei Unterschreiten einer durch die Temperatur im Hochtemperaturspeicher vorbestimmten, mittels eines dem Kollektorkanal zugeordneten Temperaturfühlers festgestellten Mindesttemperatur des zirkulierenden Wärmeträgerfluids eine Steuerventilanordnung umgesteuert wird und der Kollektorkanal vom Hochtemperaturspeicher getrennt und an einen Niedertemperaturspeicher für Wärmepumpenbetrieb angeschlossen wird.

Eine derartige Einrichtung ist vor allem für eine elektrische multivalente Hauswärmesteuerung unter bevorzugtem Einsatz von Solarenergie von Bedeutung, bei der dem Sonnenkollektor ein der Sonne abgewandter Absorber unter Bildung eines sog. Hybridkollektors bzw. Allwetterkollektors zugeordnet ist.

Bei einem bekannten Verfahren dieser Art unter Verwendung der Einrichtung nach EP-OS 0 054 729 kann sich das Wärmeträgerfluid, das sich während des Anschlusses des Kollektorkanals an den Niedertemperaturspeicher im abgetrennten unbenutzten Teil der Leitung zum Hochtemperaturspeicher befindet, auf die Temperatur der Umgebung abkühlen. Dies hat zur Folge, daß bei ansteigender Sonneneinstrahlung und Übergang zu Hochtemperaturspeicher-Betrieb zunächst das vergleichsweise kalte Wärmeträgerfluid in den Hochtemperaturspeicher gelangt, bevor das aus dem der Sonneneinwirkung ausgesetzten Kollektorkanal nachfließende erhitzte Wärmeträgerfluid in den Hochtemperaturspeicher eintritt. Aufgrund der Verbindung des Hochtemperaturspeichers mit dem die Pumpe und den Kollektorkanal enthaltenden Wärmeträgerfluidnetz besteht bei kalter Witterung andererseits die Gefahr einer Schwerkraftkreislaufbewegung des Wärmeträgerfluids vom Hochtemperaturspeicher zum Kollektorkanal, wo die Wärme an die Umgebung abgegeben wird.

Der Erfindung liegt die Aufgabe zugrunde, das Verfahren der eingangs genannten Art unter Beibehaltung der Einschaltung des Niedertemperaturspeichers, bis die Temperaturverhältnisse eine Umschaltung auf Hochtemperaturspeicher-Betrieb zulassen, sowie der Rückschaltung auf Niedertemperaturspeicher-Betrieb, sobald die Temperaturverhältnisse die Hochtemperaturspeicher-Betriebsweise nicht mehr zulassen, so weiter auszugestalten, daß der nachteilige Eintritt von vergleichsweise kaltem Fluid in den Hochtemperaturspeicher bei Umschaltung von Niedertemperaturspeicher- auf Hochtemperaturspeicher-Betrieb vermieden ist.

Das erfindungsgemäße Verfahren, bei dem diese Aufgabe gelöst ist, zeichnet sich durch folgende Verfahrensschritte aus:
(a) Messung der Temperatur des Wärmeträgerfluids im Kollektorkanal sowie der Temperatur in der Kollektorkammer,
(b) Vergleich der gemessenen Wärmeträgerfluidtemperatur mit der Temperatur in der Kollektorkammer zur Bildung eines ersten Temperaturdifferenzwertes,
(c) Verwendung dieses ersten Temperaturdifferenzwertes zur Umsteuerung der Steuerventilanordnung, der ein sich zwischen dem Vorlauf- und dem Rücklaufzweig erstreckender Kurzschlußzweig zugeordnet ist, im Sinne einer zeitweisen Öffnung des Kurzschlußzweiges, sobald dieser erste Temperaturdifferenzwert einen vorbestimmten Wert erreicht hat.
(d) Messung der Temperatur des Wärmeträgerfluids im Kollektorkanal sowie der Temperatur des Wärmeträgerfluids im Hochtemperaturspeicher,
(e) Vergleich der im Kollektorkanal einerseits bzw. im Hochtemperaturspeicher andererseits gemessenen Wärmeträgerfluid-Temperaturen zur Bildung eines zweiten Temperaturdifferenzwertes sowie
(f) Verwendung dieses zweiten Temperaturdifferenzwertes zur Umsteuerung der Steuerventilanordnung im Sinne eines Schließens des Kurzschlußzweiges, jedoch eines Öffnens der Verbindung zum Hochtemperaturspeicher, sobald dieser zweite Temperaturdifferenzwert einen vorbestimmten Wert erreicht hat.

Auf diese Weise ist nunmehr die Einleitung von kaltem Wärmeträgerfluid in den Hochtemperaturspeicher unmittelbar nach Umschaltung auf Hochtemperaturspeicher-Betrieb wirksam vermieden. Es ist vielmehr sichergestellt, daß das Wärmeträgerfluid zunächst so lange im Kreislauf über den Kollektorkanal und den Kurzschlußzweig geführt wird, bis es eine bestimmte Temperatur erreicht hat, ehe durch Umsteuerung der Steuerventilanordnung der Kurzschlußzweig wieder geschlossen und statt dessen der Kreislauf über den Hochtemperaturspeicher geöffnet wird. Sollte nachfolgend die Temperatur des zirkulierenden Wärmeträgerfluids bei Austritt aus dem Kollektorkanal auf eine Temperatur absinken, die unterhalb der Temperatur des Wärmeträgerfluids im Hochtemperaturspeicher liegt, findet wiederum eine Umsteuerung der Steuerventilanordnung im Sinne einer Abtrennung des Hochtemperaturspeichers und statt dessen Zuschaltung des Niedertemperaturspeichers statt.

Eine alternative Lösung der Aufgabe der Erfindung ist durch folgende Verfahrensschritte gekennzeichnet:
(a) Messung der Temperaturen des Wärmeträgerfluids am Einlaß und am Auslaß des Kollektorkanals,
(b) Vergleich der gemessenen Wärmeträgerfluid-Temperatur am Auslaß mit der Wärmeträgerfluid-Temperatur am Einlaß zur Bildung eines ersten Temperaturdifferenzwertes,
(c) Verwendung dieses ersten Temperaturdifferenzwertes zur Umsteuerung der Steuerventilanordnung, der ein sich zwischen dem Vorlauf- und dem Rücklaufzweig erstreckender Kurzschlußzweig zugeordnet ist, im Sinne einer zeitweisen Öffnung des Kurzschlußzweiges, sobald dieser erste Temperaturdifferenzwert einen vorbestimmten Wert erreicht hat,
(d) Messung der Temperatur des Wärmeträgerfluids am Auslaß des Kollektorkanals sowie der Temperatur des Wärmeträgerfluids im Hochtemperaturspeicher,
(e) Vergleich der im Kollektorkanal einerseits bzw. im Hochtemperaturspeicher andererseits gemessenen Wärmeträgerfluid-Temperaturen zur Bildung eines zweiten Temperaturdifferenzwertes sowie
(f) Verwendung dieses zweiten Temperaturdifferenzwertes zur Umsteuerung der Steuerventilanordnung im Sinne eines Schließens des Kurzschlußzweiges, jedoch eines Öffnens der Verbindung zum Hochtemperaturspeicher, sobald der Temperaturdifferenzwert einen vorbestimmten Wert erreicht hat.

Auch in diesem Fall ist gewährleistet, daß das Wärmeträgerfluid so lange durch den Kollektorkanal zirkuliert, bis es nach Erreichen einer bestimmten Temperatur dem Hochtemperaturspeicher zugeführt werden kann, ohne daß die Gefahr einer Abkühlung des Wärmeträgerfluids im Hochtemperaturspeicher besteht.

Andererseits ist durch die Abtrennung des Hochtemperaturspeichers vom die Pumpe und den Kollektorkanal enthaltenden Wärmeträgerfluidnetz auch gewährleistet, daß nicht etwa bei kalter Witterung eine Schwerkraftkreislaufbewegung des Wärmeträgerfluids vom Hochtemperaturspeicher zum Kollektorkanal entsteht, die zur Folge hätte, daß vom Speicher Wärme abgeführt und an die Umgebung abgegeben wird, was insbesondere dann äußerst nachteilig wäre, wenn der Hochtemperaturspeicher auch mit einem Ölbrenner zur Sicherstellung einer Mindesttemperatur während der kalten Jahreszeit betrieben werden kann.

An dieser Stelle ist zu erwähnen, daß bei einem Verfahren abweichender Gattung, bei dem die Energie ausschließlich mit Hilfe des Kollektorkanals eines Sonnenkollektors gewonnen und das erhitzte Wärmeträgerfluid über eine Verbindungsleitung mit Hilfe einer Zirkulationspumpe einem einzigen Speicher zugeführt wird, diese Zirkulation und damit die Verbindung zum Speicher unterbrochen wird, wenn die Temperatur des Wärmeträgerfluids aufgrund nachlassender Sonneneinstrahlung unter eine vorbestimmte Temperatur fällt. Ein Thermostatventil, das im Aufbau und in der Funktion einem Kraftfahrzeug-Kühlerventil entspricht und an einen den Speicher kurzschließenden Kurzschlußzweig angeschaltet ist, sorgt bei dieser Einrichtung dafür, daß der über den Speicher führende Kreislauf überbrückt wird. Die Zirkulationspumpe pumpt dementsprechend das Wärmeträgerfluid nur durch den Kurzschlußzweig. Eine Wiederverbindung mit dem Speicher erfolgt erst dann, wenn das Thermostatventil bei Erreichen der vorbestimmten Mindesttemperatur die erforderliche Umschaltung vornimmt. Eine derartige Thermostatventil-Umschaltung ist mit wesentlichen Mängeln verbunden. Solange die vorbestimmte Temperatur noch nicht wieder erreicht ist, arbeitet die Zirkulationspumpe praktisch sinnlos. In diesem Fall bedarf es entweder einer zusätzlichen Zeituhrsteuerung zum Ein- und ggf. Ausschalten des Pumpenbetriebs oder aber in aufwendiger Weise der Verwendung zusätzlicher Temperaturfühler, um einen sinnvollen Pumpenbetrieb zu gewährleisten. Darüber hinaus ist als ganz besonderer Nachteil zu berücksichtigen, daß während der Zeit besonders hoher Sonneneinstrahlung die Temperatur im Speicher auf einen Wert angehoben werden kann, der weit über dem Grenzwert für die Trennung des überbrückenden Kurzschlußzweiges liegt. Sinkt die Temperatur des zufließenden Wärmeträgerfluids auf einen dicht über diesem Grenzwert liegenden Wert, dann wird dem Speicher auf einer höheren Temperatur befindliches Wärmeträgerfluid entzogen und statt dessen Wärmeträgerfluid niedrigerer Temperatur zugeführt; es findet somit insgesamt wieder eine höchst unerwünschte Abkühlung der Speicherflüssigkeit statt, ohne sie für irgendwelche nützlichen Zwecke verwertet zu haben.

An dieser Stelle sei ferner erwähnt, daß bereits eine Sonnenkollektoreinrichtung bekannt ist (DE 30 01 550 A1), bei der ein Niedertemperaturspeicher und ein Hochtemperaturspeicher vorhanden ist, die über eine Steuerventilanordnung wahlweise mit dem Sonnenkollektor in Verbindung gebracht werden, und zwar derart, daß nur dann, wenn ein größer werdendes Integral der gemessenen Temperatur sowie eine positive Temperaturdifferenz zwischen Sonnenkollektorvorlauf und Hochtemperaturspeicher vorliegen, letzterer an den Sonnenkollektor geschaltet wird; reicht diese Temperatur jedoch nicht aus, erfolgt die Anschaltung an den Niedertemperaturspeicher. Während dieser Betriebsweise kann es nicht zu einer Umschaltung auf Hochtemperaturspeicher-Betrieb kommen, auch dann nicht, wenn die Temperatur im Vorlauf eine Beschickung des Hochtemperaturspeichers ermöglichen würde. Sinkt bei Hochtemperaturspeicher-Betrieb die für den Hochtemperaturspeicher-Betrieb erforderliche Temperatur unter den Mindestwert, erfolgt eine Umschaltung auf Niedertemperatur-Betrieb. Eine automatische Umschaltung auf Hochtemperaturspeicher-Betrieb, wenn dies die Einstrahlungsverhältnisse bei Niedertemperaturpeicher-Betrieb zulassen würden, ist jedoch nicht vorgesehen, und somit bedarf es auch nicht des erfindungsgemäß vorgesehenen Aufheizens der sich auf Niedertemperaturspeicher-Betriebstemperatur befindlichen Wärmeträgerfluids durch den Kurzschlußbetrieb, bevor die Umschaltung auf Hochtemperaturspeicher-Betrieb erfolgt. Bei dieser bekannten Ausführung findet nach dem Einschalten zwar zunächst auch ein während einer vorbestimmten Verzögerungszeit erfolgender Kurzschlußbetrieb statt, d.h. der Kollektor heizt während einer gewissen Zeitspanne das in den Vorlauf-/Rücklaufleitungen befindliche, bei Anlagenstillstand abgekühlte Wärmeträgerfluid mehr oder weniger auf eine Temperatur auf, die über der Temperatur des Hochtemperaturspeichers liegt; erst -nach Ablauf dieser Zeitspanne wird letzterer an den Kollektor angeschlossen.

Ferner ist zu erwähnen, daß es zum Stand der Technik gehört (DE 25 54 975 A1), der Regelung von Sonnenkollektoranlagen die Differenz zwischen der Temperatur in der Kollektorkammer und der des Wärmeträgerfluids zugrunde zu legen, dabei allerdings die Temperatur des vom Rücklauf in den Kollektor eintretenden Fluids.

Außerdem ist es bekannt (EP 0 033 756 A1), zur Steuerung des Umschaltventils zwischen einem Wärmespeicher und einem Kollektor die Temperaturen des Wärmeträgerfluids am Einlaß und am Auslaß, nicht des Kollektorkanals sondern des Speichers heranzuziehen.

Es hat sich nun gezeigt, daß ein fester vorbestimmter Temperatur-Differenzwert, der für Betriebsbedingungen, die bei bestimmten Jahreszeiten im allgemeinen gegeben sind, optimal ist, für diejenigen bei anderen Jahreszeiten mehr oder weniger ungünstig sein kann. Bei starker Einstrahlung im Sommer genügt ein kleiner Temperaturdifferenzwert; bei Wahl des gleichen Wertes im Winterbetrieb stellt sich dagegen häufig bei Öffnung des Kurzschlußzweiges sehr bald heraus, daß der zum Übergang auf Hochtemperaturspeicher-Betrieb erforderliche Temperaturdifferenzwert, bei dem auch der Kurzschlußzweig wieder geschlossen wird, nicht erreicht wird. Infolgedessen wird in diesem Fall wieder eine Umsteuerung auf Niedertemperaturspeicher-Betrieb vorgenommen.

Um in sinnvoller Weise eine Umsteuerung im Sinne der Öffnung des Kurzschlußzweiges nur dann zu bewirken, wenn die Wahrscheinlichkeit groß ist, daß anschließend wieder auf Hochtemperatur-betrieb übergegangen werden kann, empfiehlt es sich, den vorbestimmten Temperaturdifferenzwert nach gewisser festen Kriterien zu definieren, und zwar hat es sich als zweckmäßig erwiesen, wenn beim Verfahren gemäß einer der beiden eingangs genannten Alternativen nach der Erfindung die Merkmale (a) und (b) durch folgende Merkmale ersetzt sind:
(g) Messung der Temperatur des Wärmeträgerfluids im Hochtemperaturspeicher sowie der Temperatur des Wärmeträgerfluids im Niedertemperaturspeicher,
(h) Vergleich der gemessenen Wärmeträgerfluid-Temperatur im Hochtemperaturspeicher mit der Wärmeträgerfluid-Temperatur im Niedertemperaturspeicher sowie
(i) Verwendung dieses Temperaturdifferenzwertes zur Umsteuerung der Steuerventilanordnung im Sinne einer zeitweisen Öffnung des Kurzschlußzweiges.

Im Winter ist erfahrungsgemäß die Differenz zwischen der Fluidtemperatur im Hochtemperaturspeicher und derjenigen im Niedertemperaturspeicher wesentlich größer als im Sommer. Dementsprechend wird im Winter ein höherer für die Umsteuerung relevanter Temperaturdifferenzwert vorbestimmt als im Sommer.

Um die Zirkulation des Wärmeträgerfuids im Wärmeträgerfluidnetz sicherzustellen, ist im einfachsten Fall eine Pumpe bestimmter Leistung eingeschaltet. Als in weiterer Ausgestaltung der Erfindung sehr zweckmäßig hat es sich erwiesen, wenn eine Pumpe mit regelbarer Förderleistung Einsatz findet, die bei Umschaltung vom Kurzschlußzweigbetrieb auf Hochtemperaturspeicher-Betrieb entsprechend dem jeweiligen Temperaturdifferenzwert der im Hochtemperaturspeicher einerseits und im Kollektorkanal andererseits gemessenen Wärmeträgerfluid-Temperaturen geregelt wird. Nimmt der fragliche Temperaturdifferenzwert ab, beispielsweise als Folge einer plötzlichen Verminderung der Einstrahlung, dann wird die Förderleistung verringert und das Wärmeträgerfluid strömt langsamer durch das Netz und damit auch durch den Kollektor. Erst wenn sich zeigt, daß auch während eines langsamen Durchströmens des Kollektorkanals kein ausreichend hoher Temperaturanstieg erreicht wird, kommt es bei Unterschreiten eines Mindesttemperaturdifferenzwertes von beispielsweise 6° C zur Umsteuerung auf Niedertemperaturspeicher-Betrieb.

Die Erfindung ist weiterhin auf eine Einrichtung zur Durchführung des erfindungsgemäßen Verfahrens gerichtet. Diese Einrichtung umfaßt einen Sonnenkollektor aus einer Mehrzahl von an der Außenseite eines Gebäudes oder dergleichen festlegbaren, miteinander kuppelbaren, an ein Wärmeträgerfluidnetz anschließbaren Kollektorelementen, die jeweils einen in einer der Sonne zugewandten Ebene liegenden, am Boden einer von einer transparenten Abdeckung begrenzten Kollektorkammer befindlichen Kollektorkanal umfassen, der über eine Verbindungsleitung aus einem Vorlauf- bzw. Rücklaufzweig aus einer Normalbetriebsstellung, in der er mit einem Hochtemperaturspeicher verbunden ist, bei Unterschreiten einer vorbestimmten, mittels eines am Kollektorkanal zugeordneten Temperaturfühlers festgestellten Mindesstemperatur des zirkulierenden Wärmeträgerfluids über eine Steuerventilanordnung vom Hochtemperaturspeicher trennbar und an einen Niedertemperaturspeicher anschließbar ist, sowie ggf. einen in einer quer zum Kollektorkanal ausgerichteten Ebene liegenden Absorberkanal, der mit der Umgebungsluft in Berührung steht und über eine zweite, eine Pumpe enthaltende Verbindungsleitung an den Niedertemperaturspeicher angeschlossen ist, der mit dem Hochtemperaturspeicher über eine Wärmepumpe in Verbindung steht. Die erfindungsgemäße Einrichtung zeichnet sich dadurch aus, daß dem Abosorberkanal ein Temperaturfühler und daß sowohl dem Kollektorelement mit dem Kollektorkanal als auch dem Hochtemperaturspeicher sowie dem Niedertemperaturspeicher Temperaturfühler zugeordnet sind, die ebenso wie die Steuerventilanordnung mit einem eine Meßwertvergleichsschaltung umfassenden Steuergerät in Verbindung stehen, und daß in die Kollektorkanal-Verbindungsleitung ein die Verbindung sowohl zum Niedertemperaturspeicher als auch zum Hochtemperaturspeicher unterbrechender und den Vorlauf- bzw. Rücklaufzweig miteinander unmittelbar verbindender Kurzschlußzweig eingeschaltet ist, über den das Wärmeträgerfluid bei Umsteuerung der Steuerventilanordnung vom Niedertemperaturspeicher-Betrieb auf Hochtemperaturspeicher-Betrieb zunächst so lange zirkuliert, bis es im Kollektorkanal die für die Zuleitung in den Hochtemperaturspeicher erforderliche höhere Temperatur erreicht hat, wobei außer dem die die Temperatur des im Kollektorkanal strömenden Wärmeträgerfluids ermittelnden Temperaturfühler ein ebenfalls mit dem Steuergerät verbundener, die Temperatur in der Kollektorkammer feststellender Temperaturfühler vorgesehen ist, der bei Ansteigen der Temperatur in der Kollektorkammer auf einen vorbestimmten Wert relativ zur Temperatur im Kollektorkanal übe: das Steuergerät die Umschaltung vom Niedertemperaturspeicher-Betrieb auf die dem Hochtemperaturspeicher-Betrieb vorausgehende Kurzschlußzweigzirkulation auslöst.

Weitere Einzelheiten, Vorteile und Merkmale ergeben sich aus der folgenden Beschreibung und anhand der beigefügten Zeichnung mit zwei Figuren, in denen die Erfindung lediglich beispielsweise und nicht einschränkend veranschaulicht ist.

Die Einrichtung zur Umsetzung von Sonnenenergie in Wärme umfaßt einen in der Zeichnung nur sehr schematisch veranschaulichen Sonnenkollektor, der aus einer Mehrzahl von an der Außenseite eines Gebäudes oder dergleichen festgelegten Kollektorelementen 1 besteht. Diese können den vorbekannten prinzipiellen Aufbau besitzen, d.h. einen Isolierkörper 2 mit in bezug zueinander einen annähernd rechten Winkel einschließenden geneigten Flächen umfassen. Der der Sonne zugewandten Fläche ist ein Kollektorkanal 3 zugeordnet, der sich quer zu dieser erstreckenden Fläche ein Absorberkanal 4. Jeder der beiden Kanäle 3, 4 weist je einen Zulauf 5 bzw. 6 und einen Ablauf 7 bzw. 8 auf, über die jedes Kollektorelement 1 mit einem gleichartigen benachbarten Kollektorelement gekuppelt bzw. an ein Wärmeträgerfluidnetz 9 angeschlossen werden kann. Letzteres umfaßt eine erste Verbindungsleitung aus einem Vorlaufzweig 10 und einem Rücklaufzweig 11, über die der Kollektorkanal 3 entweder mit einem Hochtemperaturspeicher 12 oder mit einem Niedertemperaturspeicher 13 verbindbar ist. Über eine zweite Verbindungsleitung aus einem ?weiten Vorlaufzweig 14 und einem zweiten Rücklaufzweig 15 steht der Absorberkanal 4 mit dem Niedertemperaturspeicher 13 in Verbindung. Sowohl die erste Verbindungsleitung 10, 11 als auch die zweite Verbindungsleitung 14, 15 enthalten jeweils eine Pumpe 16 bzw. 17 zur Sicherstellung der Zirkulation des Wärmeträgerfluids.

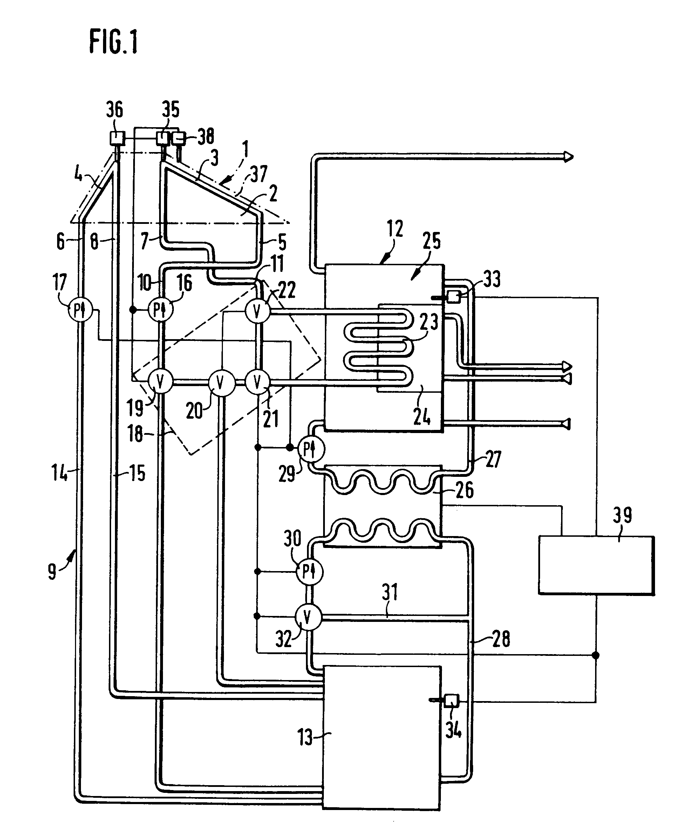

Die erste Verbindungsleitung 10, 11 umfaßt eine Ventilanordnung 18, die im veranschaulichten Beispiel gemäß Fig. 1 aus vier elektromagnetisch betätigbaren Zweiwegeventilen 19, 20, 21, 22 besteht. Das Zweiwegeventil 19 ermöglicht die Verbindung des Vorlaufzweiges 10 mit dem Hochtemperaturspeicher 12 bzw. dem Niedertemperaturspeicher 13. In den Weg zum Hochtemperaturspeicher 12 sind dabei die Zweiwegeventile 20 und 21 hintereinanderliegend eingeschaltet, und ein von letzterem zum Zweiwegeventil 22 führender Zweig ist abgetrennt. Die Zweiwegeventile 20, 21 und 22 ermöglichen bei Umsteuerung die Verbindung des Niedertemperaturspeichers 13 mit dem Rücklaufzweig 11. Dabei ist der Hochtemperaturspeicher 12 durch den Verbindungszweig zwischen den Ventilen 21 und 22 überbrückt. Bei Anschluß des Hochtemperaturspeichers 12 über die Vorlauf- bzw. Rücklaufzweige 5, 7 an den Kollektorkanal 3 wird über einen Wärmetauscher 23 die zugeführte Wärme entweder an das im Boiler 24 befindliche Brauchwasser oder an das im Raum 25 außerhalb des Boilers 24 befindliche Heizwasser abgegeben.

Zwischen dem Niedertemperaturspeicher 13 und dem Hochtemperaturspeicher 12 ist eine Wärmepumpe 26 eingeschaltet. In den beiden Kreisläufen 27, 28 zwischen den Speichern 12, 13 und der Wärmepumpe 26 liegen jeweils Umwälzpumpen 29, 30. Niedertemperaturspeicherseitig ist die Wärmepumpe 26 durch eine Kurzschlußleitung 31 mit einem eingeschalteten kontinuierlich aufsteuerbaren Ventil 32 überbrückbar. Dem Hochtemperaturspeicher 12 und dem Niedertemperaturspeicher 13 sind jeweils ein Temperaturfühler 33, 34 zugeordnet. Die Temperatur im Kollektorkanal 3 ermittelt ein Temperaturfühler 35 und im Absorberkanal 4 ein Temperaturfühler 36. Der Kollektorkanal 3 befindet sich auf bekannte, in der Zeichnung nicht näher veranschaulichte Weise unterhalb einer transparenten Abdeckung am Boden einer von ihr begrenzten Kollektorkammer 37. Zur Feststellung der Temperatur in dieser Kollektorkammer 37 ist ein weiterer Temperaturfühler 38 vorgesehen.

Durch Punkt-Linien ist angedeutet, daß sämtliche Temperaturfühler 33 bis 36 und 38 mit einem Steuergerät 39 mit Meßwertvergleichsschaltungen in Verbindung stehen. In analoger Weise sind sowohl die Pumpen 16, 17 sowie 29 und 30 als auch die Zweiwegeventile 19 bis 22 und das Steuerventil 32 mit dem Steuergerät verbunden, von dem aus die Steuerung der fraglichen Geräte erfolgt.

Stellt der Temperaturfühler 38 bei Niedertemperaturspeicher-Betrieb eine genügend große Temperaturdifferenz im Verhältnis zur Temperatur des Tempereraturfühlers 35 fest, dann werden die Zweiwegeventile 19, 20 so umgesteuert, daß die Pumpe 16 das Wärmeträgerfluid im Kurzschlußkreislauf über die Zweiwegeventile 19 bis 22 führt. Während dieser Betriebsweise steigt die vom Temperaturfühler 35 gemessene Temperatur an. Sobald das Steuergerät 39 aufgrund der gemessenen und ihm zugeleiteten Temperaturwerte feststellt, daß eine bestimmte positive Temperaturdifferenz gegenüber der vom Temperaturfühler 33 ermittelten. Temperatur des Wärmeträgerfluids im Hochtemperaturspeicher 12 erreicht ist, sorgt er für eine Umsteuerung der Zweiwegeventile 21, 22. Das im Kollektorkanal 3 erwärmte Wärmeträgerfluid fließt dann unter der Wirkung der Pumpe 16 über das Zweiwegeventil 22, den Wärmetauscher 23 des Hochtemperaturspeichers 12 und die Zweiwegeventile 21, 20 und 19.

Fällt die Differenz der von den Temperaturfühlern 35 und 33 festgestellten Temperatur unter einen bestimmten Wert, dann werden die Zweiwegeventile 19 bis 22 so umgesteuert, daß die Verbindung zwischen den Ventilen 19 und 20 unterbrochen ist und das Wärmeträgerfluid am Hochtemperaturspeicher 12 vorbei über den Niedertemperaturspeicher 1.3 geführt wird.

Bevor im Zuge allmählicher Erwärmung wieder eine Umschaltung auf Hochtemperaturspeicher-Betrieb stattfindet, findet wiederum zunächst ein Betrieb im Kurzschlußkreislauf unter Überbrückung sowohl des Niedertemperaturspeichers 13 als auch des Hochtemperaturspeichers 12 statt.

Anstelle der in der Zeichnung veranschaulichten Verwendung des Temperaturfühlers 38 in Verbindung mit dem Temperaturfühler 35 ist es auch möglich, die zunehmende Aufheizung durch Anwachsen der Einstrahlungsenergie auf andere Weise zu ermitteln und auszunutzen. So kann anstelle des in der Kollektorkammer 37 vorgesehenen Temperaturfühlers 38 auch eine Temperaturfühleranordnung sowohl am Einlaß als auch am Auslaß des Kollektorkanals zum Messen der dort vorhandenen, im Steuergerät auszuwertenden Temperaturen herangezogen werden. In diesem Fall wird die gemessene Temperaturdifferenz mit einem vorbestimmten Wert zur Bildung eines Vergleichswertes verglichen. Bei Erreichen eines Vergleichswertes vorbestimmter Größe löst das Steuergerät die Umsteuerung der Steuerventilanordnung im Sinne einer Öffnung des Kurzschlußzweiges aus. Auch in diesem Fall wird die Differenz der Temperatur des Wärmeträgerfluids am Auslaß des Kollektorkanals sowie der Temperatur des Wärmeträgerfluids im Hochtemperaturspeicher herangezogen, um den Zeitpunkt für die Trennung des Kurzschlußzweiges und die gleichzeitige Einschaltung des Hochtemperaturspeichers in den Kreislauf zu bestimmen.

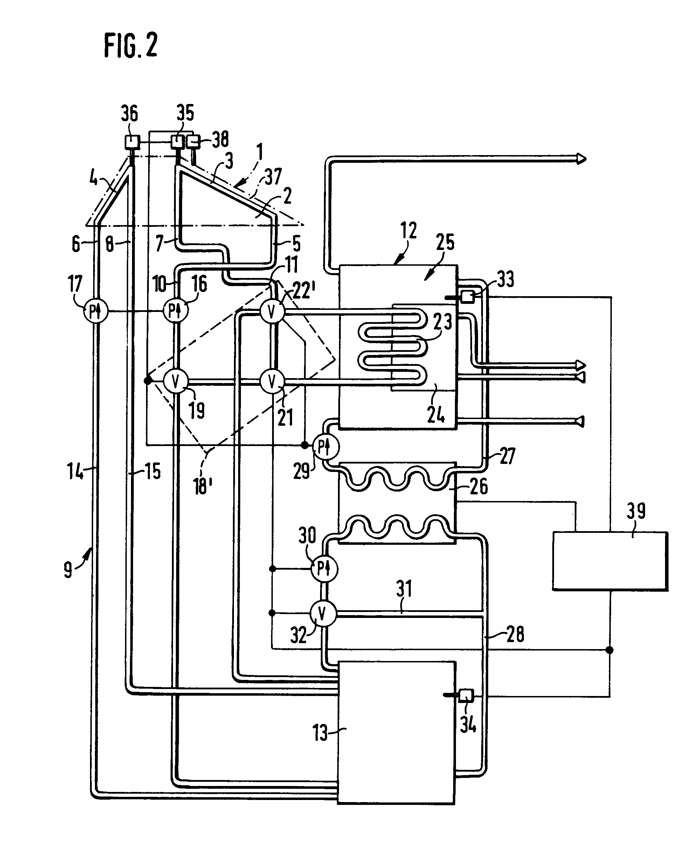

Anstelle der in Fig. 1 gezeigten Ventilanordnung 18 mit vier Zweiwegeventilen kann gemäß Fig. 2 auch eine Ventilanordnung 18′ mit den beiden Zweiwegventilen 19, 21 und mit einem ebenfalls elektromagnetisch vom Steuergerät 39 aus umsteuerbaren Dreiwegeventil 22′ Einsatz finden. Über letzteres läßt sich entweder der Kreislauf über den Niedertemperaturspeicher 13 oder über den Hochtemperaturspeicher 12 oder aber als dritte Möglichkeit zunächst über das Zweiwegeventil 21 zum Zweiwegeventil 19 unmittelbar, d.h. ebenfalls im Kurzschlußbetrieb führen, bis das Steuergerät 39 unter Auswertung der Meßwerte der verschiedenen Temperaturfühler auf die vorbeschriebene Weise die Umschaltung auf Hochtemperaturspeicher-Betrieb auslöst.

Vorstehend ist die Zweckmäßigkeit der zeitweisen Öffnung des Kurzschlußzweiges beim Übergang vom Niedertemperaturspeicher-Betrieb auf Hochtemperaturspeicher-Betrieb dargelegt. Umgekehrt kann es dann von Vorteil sein, vor dem Übergang vom Hochtemperaturspeicher-Betrieb auf Niedertemperaturspeicher-Betrieb ebenfalls zunächst den Kurzschlußzweig zeitweise zu öffnen, wenn nur kurzzeitig die Strahlungsintensität nachläßt, beispielsweise als Folge einer plötzlichen Bewölkung. In diesem Fall kann während der vorübergehenden Öffnung des Kurzschlußzweiges die Strahlungsintensität wieder zunehmen mit der Folge, daß die Differenz der Temperatur im Hochtemperaturspeicher und der Temperatur im Kollektorkanal in relativ kurzer Zeit wieder ausreichend groß wird, um die Umsteuerung auf Hochtemperaturspeicher-Betrieb auszulösen. Auch diese Verfahrensweise liegt im Rahmen der Erfindung.

Bei den in der Figurenbeschreibung erläuterten Verfahren wird jeweils von zwei Temperaturmeßwerten ausgegangen, nämlich von der gemessenen Temperatur des Wärmeträgerfluids im Kollektorkanal, und zwar ausgangsseitig, sowie der Temperatur in der Kollektorkammer oder statt dessen von der Temperatur an der Eingangsseite des Kollektorkanals. Bei Niedertemperaturspeicher-Betrieb bringt die Zufuhr von relativ kalter Sole eine Abkühlung der in der Kollektorkammer 37 befindlichen Luft mit sich. Der vom Temperaturfühler 38 gemessene Temperaturwert entspricht somit nicht der Energieeinstrahlung; er wird vielmehr durch die Luftabkühlung verfälscht. Als sehr zweckmäßig hat es sich deshalb erwiesen, wenn der Temperaturfühler 38 gegenüber der unmittelbaren Umgebung isoliert, d. h. wärmegedämmt in die Kollektorkammer 37 eingebaut wird. Da dieser Temperaturfühler praktisch die Temperatur mißt, die sich ergeben würde, wenn sich keine Zirkulation des Wärmeträgerfluids auswirkte, wird somit eine "Stillstandstemperatur" ermittelt, d. h. Temperatur, die sich bei undurchflossenem Kollektorkanal einstellen würde. Dadurch ist die Möglichkeit gegeben, den mit dem so wärmegedämmt eingebauten Temperaturfühler 38 gemessenen Temperaturwert beim Übergang vom Niedertemperaturspeicher-Betrieb auf Hochtemperaturspeicher-Betrieb unmittelbar für Zwecke der Umsteuerung auf den vorübergehenden Kurzschlußzweig-Betrieb zugrundezulegen, d. h. nur dessen Temperatur zu ermitteln. Auf Hochtemperaturspeicherbetrieb wird jedoch erst umgesteuert, wenn die von den Temperaturfühlern 35 und 33 gemessenen Werte zeigen, daß hierfür die Voraussetzungen gegeben sind, nämlich eine Temperaturdifferenz von z. B. 6° C erreicht ist. Der Hochtemperaturspeicher-Betrieb bleibt aufrechterhalten, bis der Wert unterschritten wird, dann erfolgt wieder die Umsteuerung, wie bereits beschrieben.

Analog könnte, statt die Auswirkung der Licht-, d. h. Energieeinstrahlung durch Temperaturmessung zu ermitteln, auch die Strahlungsintensität selbst, beispielsweise mittels eines den Kollektorelementen 1 zugeordneten Photosensors festgestellt und der Pumpen- bzw. Ventilanordnungssteuerung durch das Steuergerät 39 zugrunde gelegt werden. Hierbei ist auf seiten des Steuergeräts durch Einschaltung von Verzögerungsgliedern bzw. integrierenden Schaltelementen zu berücksichtigen, daß der Photosensor sehr schnell auf jede Veränderung der Strahlungsintensität reagiert, so daß dessen Meßwerte nicht mit denen vergleichbar sind, die die Temperaturfühler 35 und 38 liefern. Es bedarf vielmehr beispielsweise der Ermittlung und integrierenden Auswertung einer Vielzahl von im Laufe eines gewissen Zeitraums festgestellten Meßwerten, um von diesen ausgehend einen die Trägheit simulierenden Wert zu errechnen, der dann der Steuerung zugrunde gelegt wird.

## Patentansprüche

1. Verfahren zur Umsetzung von Sonnenenergie in Wärme mit Hilfe eines Sonnenkollektors aus einer Mehrzahl von an der Außenseite eines Gebäudes oder dgl. festgelegten, miteinander gekuppelten und an ein Wärmeträgerfluidnetz (9) angeschlossenen Kollektorelementen (1), die jeweils einen am Boden einer von einer transparenten Abdeckung begrenzten Kollektorkammer (37) befindlichen Kollektorkanal (3) anfassen, der über eine verbindungsleitung aus einem vorlauf- (10) und einem Rücklaufzweig (11) normalerweise mit einem Hochtemperaturspeicher (12) in Verbindung steht, bis bei Unterschreiten einer durch die Temperatur im Hochtemperaturspeicher vorbestimmten, mittels eines dem Kollektorkanal (3) zugeordneten Temperaturfühlers (35) festgestellten Mindesttemperatur des zirkulierenden Wärmeträgerfluids eine Steuerventilanordnung (18;18′) umgesteuert wird und der Kollektorkanal (3) vom Hochtemperaturspeicher (12) getrennt und an einen Niedertemperaturspeicher (13) für Wärmepumpenbetrieb angeschlossen wird, **gekennzeichnet** durch folgende Verfahrensschritte beim Übergang vom Niedertemperaturspeicher-Betrieb zum Hochtemperaturspeicher-Betrieb:
(a) Messung der Temperatur des Wärmeträgerfluids im Kollektorkanal (3) sowie der Temperatur in der Kollektorkammer (37),
(b) Vergleich der gemessenen Wärmeträgerfluid-Temperatur mit der Temperatur in der Kollektorkammer zur Bildung eines ersten Temperaturdifferenzwertes,
(c) Verwendung dieses ersten Temperaturdifferenzwertes zur Umsteuerung der Steuerventilanordnung (18;18′), der ein sich zwischen dem Vorlauf- und dem Rücklaufzweig erstreckender Kurzschlußzweig zugeordnet ist, im Sinne einer zeitweisen Öffnung des Kurzschlußzweiges, sobald dieser erste Temperaturdifferenzwert einen vorbestimmten Wert erreicht hat.
(d) Messung der Temperatur des Wärmeträgerfluids im Kollektorkanal (3) sowie der Temperatur des Wärmeträgerfluids im Hochtemperaturspeicher (12),
(e) Vergleich der im Kollektorkanal einerseits bzw. im Hochtemperaturspeicher (12) andererseits gemessenen Wärmeträgerfluid-Temperaturen zur Bildung eines zweiten Temperaturdifferenzwertes sowie
(f) Verwendung dieses zweiten Temperaturdifferenzwertes zur Umsteuerung der Steuerventilanordnung (18;18′) im Sinne eines Schließens des Kurzschlußzweiges, jedoch eines Öffnens der Verbindung zum Hochtemperaturspeicher, sobald dieser zweite Temperaturdifferenzwert einen vorbestimmten Wert erreicht hat.

2. Verfahren zur Umsetzung von Sonnenenergie in Wärme mit Hilfe eines Sonnenkollektors aus einer Mehrzahl von an der Außenseite eines Gebäudes oder dgl. festgelegten, miteinander gekuppelten und an ein Wärmeträgerfluidnetz angeschlossenen Kollektorelemente, die jeweils einen am Boden einer von einer transparenten Abdeckung begrenzten Kollektorkammer befindlichen Kollektorkanal umfassen, der über eine Verbindungsleitung aus einem Vorlauf- und einem Rücklaufzweig normalerweise mit einem Hochtemperaturspeicher in Verbindung steht, bis bei Unterschreiten einer durch die Temperatur im Hochtemperaturspeicher vorbestimmten, mittels eines dem Kollektorkanal zugeordneten Temperaturfühlers festgestellten Mindesttemperatur des zirkulierenden Wärmeträgerfluids eine Steuerventilanordnung umgesteuert wird, und der Kollektorkanal vom Hochtemperaturspeicher getrennt und an dienen Niedertemperaturspeicher für Wärmepumpenbetrieb angeschlossen wird, **gekennzeichnet** durch folgende Verfahrensschritte beim Übergang vom Niedertemperaturspeicher-Betrieb zum Hochtemperaturspeicher-Betrieb:
(a) Messung der Temperaturen des Wärmeträgerfluids am Einlaß und am Auslaß des Kollektorkanals,
(b) Vergleich der gemessenen Wärmeträgerfluid-Temperatur am Auslaß mit der Wärmeträgerfluid-Temperatur am Einlaß zur Bildung eines ersten Temperaturdifferenzwertes,
(c) Verwendung dieses ersten Temperaturdifferenzwertes zur Umsteuerung der Steuerventilanordnung, der ein sich zwischen dem Vorlauf- und dem Rücklaufzweig erstreckender Kurzschlußzweig zugeordnet ist, im Sinne einer zeitweisen Öffnung des Kurzschlußzweiges, sobald dieser erste Temperaturdifferenzwert einen vorbestimmten Wert erreicht hat.
(d) Messung der Temperatur des Wärmeträgerfluids am Auslaß des Kollektorkanals sowie der Temperatur des Wärmeträgerfluids im Hochtemperaturspeicher,
(e) Vergleich der im Kollektorkanal einerseits bzw. im Hochtemperaturspeicher andererseits gemessenen Wärmeträgerfluid-Temperaturen zur Bildung eines zweiten Temperaturdifferenzwertes sowie
(f) Verwendung dieses zweiten Temperaturdifferenzwertes zur Umsteuerung der Steuerventilanordnung im Sinne eines Schließens des Kurzschlußzweiges, jedoch eines Öffnens der Verbindung zum Hochtemperaturspeicher, sobald der Temperaturdifferenzwert einen vorbestimmten Wert erreicht hat.

3. Verfahren nach Anspruch 1 oder 2, bei dem die Merkmale (a) und (b) durch folgende Merkmale ersetzt sind:
(g) Messung der Temperatur des Wärmeträgerfluids im Hochtemperaturspeicher sowie der Temperatur des Wärmeträgerlfuids im Niedertemperaturspeicher,
(h) Vergleich der gemessenen Wärmeträgerfluid-Temperatur im Hochtemperaturspeicher mit der Wärmeträgerfluid-Temperatur im Niedertemperaturspeicher sowie
(i) Verwendung dieses Temperaturdifferenzwertes zur Umsteuerung der Steuerventilanordnung im Sinne einer zeitweisen Öffnung des Kurzschlußzweiges.

4. Verfahren nach einem der Ansprüche 1 bis 3, bei dem das Wärmeträgerfluid im Wärmeträgerfluidnetz mittels einer Pumpe in Zirkulationsbewegung versetzt wird, dadurch gekennzeichnet, daß eine Pumpe mit regelbarer Förderleistung Einsatz findet, die bei Umschaltung vom Kurzschlußzweigbetrieb auf Hochtemperaturspeicher-Betrieb, entsprechend dem jeweiligen Temperaturdifferenzwert der im Hochtemperaturspeicher einerseits und im Kollektorkanal andererseits gemessenen Wärmeträgerfluid-Temperaturen, geregelt wird.

5. Einrichtung zur Durchführung des Verfahrens nach einem der vorstehenden Ansprüche mit einem Sonnenkollektor aus einer Mehrzahl von an der Außenseite eines Gebäudes oder dergleichen festlegbaren, miteinander kuppelbaren, an ein Wärmeträgerfluidnetz anschließbaren Kollektorelementen (1), die jeweils einen in einer der Sonne zugewandten Ebene liegenden, am Boden einer von einer transparenten Abdeckung begrenzten Kollektorkammer (37) befindlichen Kollektorkanal (3) umfassen, der über eine Verbindungsleitung aus einem vorlauf- (10) bzw. Rücklaufzweig (11) aus einer Normalbetriebsstellung, in der er mit einem Hochtemperaturspeicher (12) verbunden ist, bei Unterschreiten einer vorbestimmten, mittels eines dem Kollektorkanal (3) zugeordneten Temperaturfühlers (35) festgestellten Mindesttemperatur des zirkulierenden Wärmeträgerfluids über eine Steuerventilanordnung (18; 18′) vom Hochtemperaturspeicher (12) trennbar und an einen Niedertemperaturspeicher (13) anschließbar ist, sowie ggf. einen in einer quer zum Kollektorkanal (3) ausgerichteten Ebene liegenden Absorberkanal (4), der mit der Umgebungsluft in Berührung steht und über eine zweite, eine Pumpe (17) enthaltende Verbindungsleitung (14, 15) an den Niedertemperaturspeicher (13) angeschlossen ist, der mit dem Hochtemperaturspeicher (12) über eine Wärmepumpe (26) in Verbindung steht, dadurch gekennzeichnet, daß dem Absorberkanal (4) ein Temperaturfühler (36) und daß sowohl dem Kollektorelement (1) mit dem Kollektorkanal (3) als auch dem Hochtemperaturspeicher (12) sowie dem Niedertemperaturspeicher (13) Temperaturfühler (33, 34, 35 und 38) zugeordnet sind, die ebenso wie die Steuerventilanordnung (18; 18′) mit einem eine Meßwertvergleichsschaltung umfassenden Steuergerät (39) in Verbindung stehen, und daß in die Kollektorkanal-verbindungsleitung (10, 11) ein die Verbindung sowohl zum Niedertemperaturspeicher (13) als auch zum Hochtemperaturspeicher (12) unterbrechender und den vorlauf- bzw. Rücklaufzweig miteinander unmittelbar verbindender Kurzschlußzweig eingeschaltet ist, über den das Wärmeträgerfluid bei Umsteuerung der Steuerventilanordnung vom Niedertemperaturspeicher-Betrieb auf Hochtemperaturspeicher-Betrieb zunächst so lange zirkuliert, bis es im Kollektorkanal die für die Zuleitung in den Hochtemperaturspeicher erforderliche höhere Temperatur erreicht hat, wobei außer dem die Temperatur des im Kollektorkanal (3) strömenden Wärmeträgerfluids ermittelnden Temperaturfühler (35) ein ebenfalls mit dem Steuergerät (39) verbundener, die Temperatur in der Kollektorkammer (37) feststellender Temperaturfühler (38) vorgesehen ist, der bei Ansteigen der Temperatur in der Kollektorkammer (37) auf einen vorbestimmten Wert relativ zur Temperatur im Kollektorkanal (3) über das Steuergerät (39) die Umschaltung vom Niedertemperaturspeicher-Betrieb auf die dem Hochtemperaturspeicher-Betrieb vorausgehende Kurzschlußzweigzirkulation auslöst.

6. Einrichtung nach Anspruch 5, dadurch gekennzeichnet, daß anstelle des Fühlers (35) für den Kollektorkanal letzterem eingangsseitig und ausgangsseitig jeweils ein Temperaturfühler zur Feststellung der Meßwertdifferenz zugeordnet ist, die über das Steuergerät die zeitweise Öffnung des Kurzschlußzweiges auslöst.

## Claims

1. Process for converting solar energy into heat by means of a solar collector consisting of a plurality of collector elements (1) which are secured to the outside of a building or the like, are coupled to one another and are connected to a heat-carrier fluid network (9) and which in each case comprise a collector channel (3), located on the base of a collector chamber (37) limited by a transparent cover, which collector channel is normally linked, via a link circuit consisting of a forward circuit branch (10) and a return circuit branch (11), to a high-temperature store (12), until, in the event of a fall below a minimum temperature of the circulating heat-carrier fluid, which minimum temperature is pre-determined by the temperature in the high-temperature store and detected by means of a temperature sensor (35) assigned to the collector channel (3), a control valve arrangement (18; 18′) is reversed and the collector channel (3) is separated from the high-temperature store (12) and connected to a low-temperature store (13) for heat-pump operation, characterised by the following procedural steps in connection with the transition from the low-temperature store operation to the high-temperature store operation:
(a) measurement of the temperature of the heat-carrier fluid in the collector channel (3) and of the temperature in the collector chamber (37),
(b) comparison of the measured heat-carrier fluid temperature with the temperature in the collector chamber, for the creation of a first temperature differential value,
(c) use of this first temperature differential value for the reversal of the control valve arrangement (18; 18′), to which a short-circuit branch extending between the forward circuit branch and the return circuit branch is assigned, in the sense of a temporary opening of the short-circuit branch as soon as this first temperature differential value has reached a predetermined value,
(d) measurement of the temperature of the heat-carrier fluid in the collector channel (3) and of the temperature of the heat-carrier fluid in the high-temperature store (12),
(e) comparision of the heat-carrier fluid temperatures measured in the collector channel, on the one hand, and in the high-temperature store (12), on the other hand, for the creation of a second temperature differential value and
(f) use of this second temperature differential value for the reversal of the control valve arrangement (18; 18′) in the sense of a closing of the short-circuit branch, yet an opening of the link to the high-temperature store, as soon as this second temperature differential value has reached a pre-determined value.

2. Process for converting solar energy into heat by means of a solar collector consisting of a plurality of collector elements which are secured to the outside of a building or the like, are coupled to one another and are connected to a heat-carrier fluid network and which in each case comprise a collector channel, located on the base of a collector chamber limited by a transparent cover, which collector channel is normally linked, via a link circuit consisting of a forward circuit branch and a return circuit branch, to a high-temperature store, until, in the event of a fall below a minimum temperature of the circulating heat-carrier fluid, which minimum temperature is pre-determined by the temperature in the high-temperature store and detected by means of a temperature sensor assigned to the collector channel, a control valve arrangement is reversed and the collector channel is separated from the high-temperature store and connected to a low-temperature store for heat-pump operation, characterised by the following procedural steps in connection with the transition from the low-temperature store operation to the high-temperature store operation:
(a) measurement of the temperatures of the heat-carrier fluid at the inlet and at the outlet of the collector channel,
(b) comparison of the measured heat-carrier fluid temperature at the outlet with the heat-carrier fluid temperature at the inlet, for the creation of a first temperature differential value,
(c) use of this first temperature differential value for the reversal of the control valve arrangement, to which a short-circuit branch extending between the forward circuit branch and the return circuit branch is assigned, in the sense of a temporary opening of the short-circuit branch as soon as this first temperature differential value has reached a pre-determined value,
(d) measurement of the temperature of the heat-carrier fluid at the outlet of the collector channel and of the temperature of the heat-carrier fluid in the high-temperature store,
(e) comparison of the heat-carrier fluid temperatures measured in the collector channel, on the one hand, and in the high-temperature store, on the other hand, for the creation of a second temperature differential value and
(f) use of this second temperature differential value for the reversal of the control valve arrangement in the sense of a closing of the short-circuit branch, yet an opening of the link to the high-temperature store, as soon as the temperature differential value has reached a pre-determined value.

3. Process according to Claim 1 or 2, in which the features (a) and (b) are replaced by the following features:
(g) measurement of the temperature of the heat-carrier fluid in the high-temperature store and of the temperature of the heat-carrier fluid in the low-temperature store,
(h) comparison of the measured heat-carrier fluid temperature in the high-temperature store with the heat-carrier fluid temperature in the low-temperature store and
(i) use of this temperature differential value for the reversal of the control valve arrangement in the sense of a temporary opening of the short-circuit branch.

4. Process according to one of Claims 1 to 3, in which the heat-carrier fluid in the heat-carrier fluid network is set into circulatory motion by means of a pump, characterised in that a pump having an adjustable pump capacity finds application, which pump, upon the switchover from short-circuit branch operation to high-temperature store operation, is regulated according to the respective temperature differential value of the heat-carrier fluid temperatures measured in the high-temperature store, on the other hand, and in the collector channel, on the other hand.

5. Device for realising the process according to one of the preceding claims, having a solar collector consisting of a plurality of collector elements (1) which can be secured to the outside of a building or the like, can be coupled to one another and can be connected to a heat-carrier fluid network and which in each case comprise a collector channel (3), lying in a sun-facing plane and located on the base of a collector chamber (37) limited by a transparent cover, which collector channel, from a normal operating position in which it is linked to a high-temperature store (12) and via a link circuit consisting of a forward circuit branch (10) and a return circuit branch (11), in the event of a fall below a predetermined minimum temperature of the circulating heat-carrier 'fluid, which minimum temperature is detected by means of a temperature sensor (35) assigned to the collector channel (3), can be separated by means of a control valve arrangement (18; 18′) from the high-temperature store (12) and connected to a low-temperature store (13), and additionally comprise, where appropriate, an absorber channel (4) lying in a plane aligned transversely to the collector channel (3), which absorber channel is in contact with the surrounding air and is connected via a second link circuit (14, 15), containing a pump (17), to the low-temperature store (13), which is linked to the high-temperature store (12) via a heat-pump (26), characterised in that a temperature sensor (36) is assigned to the absorber channel (4) and in that temperature sensors (33, 34, 35 and 38) are assigned both to the collector element (1) having the collector channel (3) and to the high-temperature store (12) and the low-temperature store (13), which temperature sensors, just like the control valve arrangement (18; 18′) are linked to a control unit (39) comprising a measurement value comparison circuit, and in that a short-circuit branch, which interrupts the link both to the low-temperature store (13) and to the high-temperature store (12) and which directly interlinks the forward circuit branch and the return circuit branch, is inserted into the collector channel-link circuit (10, 11), via which short-circuit branch the heat-carrier fluid, upon the reversal of the control valve arrangement from the low-temperature store operation to the high-temperature store operation, initially circulates until it has reached in the collector channel the higher temperature necessary for the feed into the high-temperature store, there being provided, in addition to the temperature sensor (35) determining the temperature of the heat-carrier fluid flowing in the collector channel (3), a temperature sensor (38) which is likewise connected to the control unit (39) and detects the temperature in the collector chamber (37) and which, in the event of a rise in temperature in the collector chamber (37) to a predetermined value relative to the temperature in the collector channel (3), triggers, via the control unit (39), the switchover from the low-temperature store operation to the short-circuit branch circulation preceding the high-temperature store operation.

6. Device according to Claim 5, characterised in that, in place of the sensor (35) for the collector channel, there is assigned to the latter, on the input side and output side respectively, a temperature sensor for detecting the measurement value differential which triggers, via the control unit, the temporary opening of the short-circuit branch.

## Revendications

1. Procédé de conversion de l'énergie solaire en chaleur à l'aide d'un collecteur solaire comprenant une pluralité d'éléments collecteurs (1) montés fixement sur le côté externe d'un bâtiment ou analogue, accouplés les uns aux autres et raccordés à un réseau de fluide caloporteur (9) qui comprennent, respectivement, un canal collecteur (3) se trouvant au fond d'une chambre collectrice (37) délimitée par un recouvrement transparent, qui est en liaison par un conduit de raccordement comprenant un branchement d'aller (10) et un branchement de retour (11) normalement avec un accumulateur de température élevée (12) jusqu'à ce que lors du passage en dessous d'une température minimale du fluide caloporteur en circulation, déterminée par la température dans l'accumulateur de température élevée, constatée au moyen d'un capteur de température (35) associé au canal collecteur (3), une vanne pilote (18; 18′) est inversée, et le canal collecteur (3) est séparé de l'accumulateur de température élevée (12) et est raccordé à un accumulateur de basse température (13) pour le fonctionnement des pompes de chaleur, caractérisé par les étapes de procédé suivantes lors du passage du fonctionnement de l'accumulateur de basse température au fonctionnement de l'accumulateur de température élevée:
(a) mesure de la température du fluide caloporteur dans le canal collecteur (3) ainsi que de la température dans la chambre collectrice (37);
(b) comparaison de la température de fluide caloporteur mesurée avec la température dans la chambre collectrice pour former une première valeur de différence de température;
(c) utilisation de cette première valeur de différence de température pour inverser le dispositif formant vanne pilote (18 ; 18′) auquel est associé un branchement de court-circuit s'étendant entre le branchement d'aller et le branchement de retour, au sens d'une ouverture temporaire du branchement de court-circuit dès que cette première valeur de différence de température a atteint une valeur prédéterminée;
(d) mesure de la température du fluide caloporteur dans le canal collecteur (3) ainsi que de la température du fluide caloporteur dans l'accumulateur de température élevée (12);
(e) comparaison des températures des fluides caloporteurs mesurées, d'une part, dans le canal collecteur et, d'autre part, dans l'accumulateur de température élevée (12) pour former une deuxième valeur de différence de température ainsi que
(f) l'utilisation de cette deuxième valeur de différence de température pour inverser le dispositif formant vanne pilote (18, 18′) au sens d'une fermeture du branchement de court-circuit, cependant d'une ouverture de la liaison menant vers l'accumulateur de température élevée dès que cette deuxième valeur de différence de température a atteint une valeur prédéterminée.

2. Procédé de conversion de l'énergie solaire en chaleur à l'aide d'un collecteur solaire comprenant une pluralité d'éléments collecteurs montés fixement sur le côté extérieur d'un bâtiment ou analogue, accouplés les uns aux autres et raccordés à un réseau de fluide caloporteur qui comprennent, respectivement, un canal collecteur se trouvant au fond d'une chambre collectrice délimitée par un recouvrement transparent et qui est en liaison par l'intermédiaire d'une conduite de raccordement comprenant un branchement d'aller et un branchement de retour normalement avec un accumulateur de température élevée jusqu'à ce que, lors du passage en dessous d'une température minimale du fluide caloporteur en circulation prédéterminée par la température dans l'accumulateur de température élevée, constatée au moyen d'un capteur de température associé au canal collecteur, un dispositif formant vanne pilote est inversé, et le canal collecteur est séparé de l'accumulateur de température élevée et est raccordé à un accumulateur de basse température pour le fonctionnement des pompes de chaleur, caractérisé par les étapes de procédé suivantes lors du passage du fonctionnement de l'accumulateur de basse température au fonctionnement de l'accumulateur de température élevée:
(a) mesure des températures du fluide caloporteur à l'entrée et à la sortie du canal collecteur;
(b) comparaison de la température de fluide caloporteur mesurée à la sortie avec la température de fluide caloporteur mesurée à l'entrée pour former une première valeur de différence de température;
(c) utilisation de cette première valeur de différence de température pour inverser le dispositif formant vanne pilote auquel est associé un branchement de court-circuit s'étendant entre le branchement d'aller et le branchement de retour, au sens d'une ouverture temporaire du branchement de court-circuit dès que cette première valeur de différence de température a atteint une valeur prédéterminée;
(d) mesure de la température du fluide caloporteur à la sortie du canal collecteur ainsi que de la température du fluide caloporteur dans l'accumulateur de température élevée;
(e) comparaison des températures des fluides caloporteurs mesurées, d'une part, dans le canal collecteur et, d'autre part, dans l'accumulateur de température élevée pour former une deuxième valeur de différence de température ainsi que
(f) l'utilisation de cette deuxième valeur de différence de température pour inverser le dispositif formant vanne pilote au sens d'une fermeture du branchement de court-circuit, cependant d'une ouverture de la liaison menant vers l'accumulateur de température élevée dès que la valeur de différence de température a atteint une valeur prédéterminée.

3. Procédé selon la revendication 1 ou 2, dans lequel les caractéristiques (a) et (b) sont remplacées par les caractéristiques suivantes:
(g) mesure de la température du fluide caloporteur dans l'accumulateur de température élevée ainsi que de la température du fluide caloporteur dans l'accumulateur de basse température:
(h) comparaison de la température de fluide caloporteur mesurée dans l'accumulateur de température élevée avec la température de fluide caloporteur mesurée dans l'accumulateur de basse température ainsi que
(i) l'utilisation de cette valeur de différence de température pour inverser le dispositif formant vanne pilote au sens d'une ouverture temporaire du branchement de court-circuit.

4. Procédé selon l'une des revendications 1 à 3, dans lequel on communique un mouvement de circulation au fluide caloporteur dans le réseau de fluide caloporteur au moyen d'une pompe, caractérisé en ce qu'on utilise une pompe à débit réglable qui est réglé lors de la commutation du fonctionnement de branchement de court-circuit au fonctionnement d'accumulateur à température élevée, en fonction de la valeur de différence de température respective des températures des fluides caloporteurs mesurées d'une part dans l'accumulateur de température élevée et d'autre part dans le canal collecteur.

5. Dispositif pour la mise en oeuvre du procédé selon l'une des revendications précédentes, comprenant un collecteur solaire constitué d'une pluralité d'éléments collecteurs (1) pouvant être montés fixement sur le côté extérieur d'un bâtiment ou analogue, pouvant être accouplés les uns aux autres et raccordés à un réseau de fluide caloporteur, qui comprennent, respectivement, un canal collecteur (3) situé dans un plan orienté vers le soleil, se trouvant au fond d'une chambre collectrice (37) délimitée par un recouvrement transparent, qui, par l'intermédiaire d'un conduit de raccordement comprenant un branchement d'aller (10) et un branchement de retour (11), respectivement, peut être séparé d'une position de fonctionnement normal dans laquelle il est relié à un accumulateur de température élevée (12), lors du passage en dessous d'une température minimale prédéterminée du fluide caloporteur en circulation, déterminée à l'aide d'un capteur de température (35) associé au canal collecteur (3), par l'intermédiaire d'un dispositif formant vanne pilote (18, 18′) de l'accumulateur de température élevée (12) et raccordé à un accumulateur de basse température (13), ainsi que, le cas échéant, un canal d'absorption (4) situé dans un plan orienté transversalement au canal collecteur (3) qui est en contact avec l'air ambiant et qui est relié par l'intermédiaire d'un deuxième conduit de raccordement (14, 15) contenant une pompe (17) à l'accumulateur de basse température (13), qui est en liaison avec l'accumulateur de température élevée (12) par une pompe de chaleur (26), caractérisé en ce qu'un capteur de température (36) est associé au canal d'absorption (4), et en ce que des capteurs de température (33,34,35 et 38) sont associés à l'élément collecteur (1) avec le canal collecteur (3) ainsi qu'à l'accumulateur de température élevée (12) et à l'accumulateur de basse température (13) qui sont en liaison, de même que le dispositif formant vanne pilote (18, 18′), avec un appareil de commande (39) comprenant un circuit comparateur des valeurs de mesure, et en ce que dans le conduit de raccordement de canal collecteur (10, 11) on a inséré un branchement de court-circuit interrompant la liaison aussi bien à l'accumulateur de basse température (13) qu'à l'accumulateur de température élevée (12) et reliant directement le branchement l'aller et le branchement de retour l'un à l'autre, respectivement, dans lequel circule le fluide caloporteur lors de l'inversion du dispositif formant vanne pilote du fonctionnement d'accumulateur de basse température au fonctionnement d'accumulateur de température élevée d'abord jusqu'à ce qu'il ait atteint dans le canal collecteur la température plus élevée nécessaire pour l'amenée dans l'accumulateur de haute température, où, à part le capteur de température (35) captant la température du fluide caloporteur s'écoulant dans le canal collecteur (3) on a prévu un capteur de température (38) relié également à l'appareil de commande (39), constatant la température dans la chambre collectrice (37) et qui, lors de la montée de la température dans la chambre collectrice (37) à une valeur prédéterminée relativement à la température dans le canal collecteur (3) déclenche par l'intermédiaire de l'appareil de commande (39) la commutation du fonctionnement de l'accumulateur de basse température à la circulation du branchement de court-circuit précédant le fonctionnement de l'accumulateur de température élevée.

6. Dispositif selon la revendication 5, caractérisé en ce qu'on associe à la place du capteur (35) pour le canal collecteur à ce dernier côté entrée et côté sortie, respectivement, un capteur de température pour constater la différence de valeur de mesure qui déclenche par l'intermédiaire de l'appareil de commande l'ouverture temporaire du branchement de court-circuit.
